# EUROPEAN PATENT SPECIFICATION

(11) **EP 3 029 910 B1**
(45) Date of publication and mention of the grant of the patent: **20.07.2022**
(21) Application number: 14195985.8
(22) Date of filing: 03.12.2014
(51) Int. Cl.: H04L 67/104

(54) **Device and method for controlling rendering in a network**
Vorrichtung und Verfahren zur Steuerung der Darstellung in einem Netzwerk
Dispositif et procédé pour contrôler le rendu dans un réseau

(43) Date of publication of application: 08.06.2016
(73) Proprietor: TOP Victory Investments Limited, Kowloon, Hong Kong 999077 (CN)
(72) Inventor: Jain, Vikas, 560045 Nagawara, Bangalore (IN)
(74) Representative: DREISS Patentanwälte PartG mbB

(56) References cited:
- EP-A1- 2 448 206
- EP-A1- 2 728 826
- WO-A1-2014/051403
- US-A1- 2008 066 181
- US-A1- 2013 067 107
- US-A1- 2013 097 291
- US-A1- 2014 003 237
- US-A1- 2014 096 164
- US-A1- 2014 153 557
- Anonymous: "Content sharing, syncing, streaming protocols for Wi-Fi | Excentis", , 12 August 2014 (2014-08-12), XP55186930, Retrieved from the Internet: URL:https://www.excentis.com/blog/content- sharing-syncing-streaming-protocols-wi-fi [retrieved on 2015-04-30]
- LORENZO KELLER ET AL: "MicroCast", MOBISYS 2012: 10TH INTERNATIONAL CONFERENCE ON MOBILE SYSTEMS, APPLICATIONS AND SERVICES, 1 January 2012 (2012-01-01), page 57, XP55186668, DOI: 10.1145/2307636.2307643 ISBN: 978-1-45-031301-8
- MATTHIAS HÄSEL ED - TOMOYA ENOKIDO ET AL: "Rich Internet Architectures for Browser-Based Multiplayer Real-Time Games - Design and Implementation Issues of virtual-kicker.com", NETWORK-BASED INFORMATION SYSTEMS : FIRST INTERNATIONAL CONFERENCE, NBIS 2007, REGENSBURG, GERMANY, SEPTEMBER 3 - 7, 2007 ; PROCEEDINGS; [LECTURE NOTES IN COMPUTER SCIENCE ; 4658], SPRINGER, BERLIN [U , 3 September 2007 (2007-09-03), pages 157-166, XP002698759, DOI: 10.1007/978-3-540-74573-0_17 ISBN: 978-3-540-74572-3 Retrieved from the Internet: URL:http://rd.springer.com/content/pdf/10. 1007%2F978-3-540-74573-0_17.pdf [retrieved on 2013-06-11]
- Anonymous: "Digital Living Network Alliance - Wikipedia, the free encyclopedia", , 27 November 2014 (2014-11-27), XP55198964, Retrieved from the Internet: URL:https://en.wikipedia.org/w/index.php?t itle=Digital_Living_Network_Alliance&oldid =635700155 [retrieved on 2015-06-29]
- Anonymous: "Wireless access point - Wikipedia, the free encyclopedia", , 24 November 2014 (2014-11-24), XP55198966, Retrieved from the Internet: URL:https://en.wikipedia.org/w/index.php?t itle=Wireless_access_point&oldid=635298484 [retrieved on 2015-06-29]
- "UPNP AV ARCHITECTURE:0.83", INTERNET CITATION, 12 June 2002 (2002-06-12), XP002295457, Retrieved from the Internet: URL:http://www.upnp.org/download/UPnPAvArc hitecture%200.83.prtad.pdf [retrieved on 2004-09-08]
- "Overview of UPnP AV Architecture", INTERNET CITATION, 2 July 2003 (2003-07-02), XP002304266, Retrieved from the Internet: URL:http://www.intel.com/technology/UPnP/d oc.htm [retrieved on 2004-11-05]
- Daniel Camps-Mur ET AL: "Device to device communications with WiFi Direct: overview and experimentation", , 11 January 2013 (2013-01-11), XP55101759, Retrieved from the Internet: URL:http://enjambre.it.uc3m.es/~agsaaved/p apers/2012_camps_wircommag.pdf [retrieved on 2014-02-12]
- ANDREAS BOBEK ET AL: "UPNP AV ARCHITECTURE - GENERIC INTERFACE DESIGN AND JAVA IMPLEMENTATION", PROCEEDINGS OF THE IASTED INTERNATIONAL CONFERENCE ON PARALLEL AND DISTRIBUTED COMPUTING AND NETWORKS : AS PART OF THE 23RD IASTED INTERNATIONAL MULTI-CONFERENCE ON APPLIED INFORMATICS, FEBRUARY 15 - 17, 2005, INNSBRUCK, AUSTRIA, ACTA PRESS, ANAHEIM, 15 February 2005 (2005-02-15), pages 699-704, XP002655148, ISBN: 978-0-88986-468-9 [retrieved on 2005-02-15]

## Description

### Background of the invention

A device for controlling rendering in a network is disclosed in patent publication US 2013/0067107. US 2013/0067107 discloses that a user of the digital media controller first selects a media renderer and then content to be rendered on the media renderer. The content may be stored on a digital media server. The media renderer and the digital media server communicate indirectly through an access point. If the format in which a selected content item can be made available by the digital media server is not supported by the media renderer, the selected content item is first sent to the digital media controller by the digital media server, transcoded and then sent to the media renderer by digital media controller. The digital media controller may connect to the digital media server and/or the media render directly through a peer-to-peer wireless network, e.g. a network setup in conformance with the Wi-Fi Direct standard.

A drawback of the media controller disclosed in US 2013/0067107 is that in a wireless home network, content is always sent from the digital media server to a media renderer through a third device, either a wireless network access point or the digital medial controller. Although connecting through a wireless network access point is normally preferred, sending data indirectly through a third device reduces the effective bandwidth of the wireless network. This means that certain high-bit rate files cannot be streamed (i.e. rendered while still being downloaded with little or no buffering at the media renderer) properly to the media renderer or need to be transcoded to files with a lower bit rate first.

XP 5518 6930 (https://www.excentis.com/blog/content-sharing-syncring-streaming-protocols-wi-fi) is related to content sharing, syncing, stream protocols for Wi-Fi, cf. title of document D1. The section "(T)DLS" refers to a tunneled direct link setup enabling devices to connect directly to one another after they have joined a traditional Wi-Fi network. It is further outlined, that the tunneled version was introduced to allow TDLS capable devices to set up the session through an access point that is the TDLS agnostic. Moreover, the figure of section "(T)DSL" discloses an 802.11n access point which has two 802.11n links to respective 802.11ac clients. The 802.11ac clients are connected to each other via a 802.11ac TDLS link between them.

US 2014/003237 A1 relates to establishing a Peer-to-Peer/Wi-Fi Direct service in a Wi-Fi network.

EP 2 728 826 A1 relates to switching peer-to-peer pairing based on available bandwidth in an architecture using Wi-Fi.

EP 2 448 206 A1 recites saving network bandwidth by establishing a P2P mode through a client/server network.

### Summary of the invention

The Invention is set out in the appended set of claims.

It is a first object to provide a device for controlling rendering in a network, which enables more high-bit rate files to be streamed from a network storage device to a rendering device.

It is a second object to provide a method of controlling rendering in a network, which enables more high-bit rate files to be streamed from a network storage device to a rendering device.

According to an example of the description, the first object is realized in that the device for controlling rendering in a network comprises a wireless transceiver for exchanging data with a network storage device and a rendering device and a processor operative to receive a user request to render a content item stored on a network storage device, determine an estimation of network bandwidth required to send said content item from said network storage device to said rendering device at a rate which allows real-time rendering without buffering at said rendering device, determine whether said estimated network bandwidth exceeds a value representing network bandwidth available when said network storage device and said rendering device communicate indirectly through a wireless network access point, use said wireless transceiver to send one or more messages requesting rendering of said content item on said rendering device with a request to send said content item through a peer-to-peer wireless network, in which said network storage device and said rendering device communicate directly, if said estimated network bandwidth exceeds said value, use said wireless transceiver to join said peer-to-peer network if said estimated network bandwidth exceeds said value, use said wireless transceiver to send one or more messages requesting rendering of said content item on said rendering device without a request to send said content item through a peer-to-peer wireless network if said estimated network bandwidth does not exceed said value, use said wireless transceiver to receive an indicator of a current rendering status from said rendering device, and display a representation of said indicator on a display.

By switching to a direct peer-to-peer network connection between network storage device and rendering device when the bandwidth would not be sufficient to stream a high bit rate file from the network storage device to the rendering device indirectly through a wireless network access point, more high-bit rate files can be streamed from the network storage device to the rendering device, while joining the peer-to-peer network allows continuation of the controller function. According to an example of the description, connections are setup seamlessly and without user intervention.

At least one of said network storage device and said rendering device may conform to the Wi-Fi Direct standard. The Wi-Fi Direct standard is a suitable peer-to-peer wireless network standard, which only requires one of said network storage device and said rendering device to comply with its specifications. The other device only needs to conform to the regular Wi-Fi (e.g. IEEE 802.11a, b, g, n and/or ac) standard.

Said processor may further be operative to repeatedly poll said rendering device and to display a current rendering position on said display. In this way, the user of the device does not have to invoke the rendering UI/OSD on the rendering device, and possibly disturb other persons viewing the rendering device, when he wants to know the current rendering position. This can be implemented using existing UPnP commands.

Said device may be a smart phone or a tablet. A portable device with a screen allows a user to control content rendering in the most convenient way.

Said processor may further be operative to detect whether said network storage device and said rendering device are capable of communicating directly through a peer-to-peer wireless network and use said wireless transceiver to send one or more messages requesting rendering of said content item on said rendering device without a request to send said content item through a peer-to-peer wireless network if said network storage device and said rendering device are not capable of communicating directly through a peer-to-peer wireless network. If the device knows beforehand that said network storage device and said rendering device are not capable of communicating directly through a peer-to-peer wireless network, e.g. because neither device conforms to the Wi-Fi Direct standard, some unnecessary processing and communication on the three involved devices can be prevented.

Said processor may further be operative to send a command to said rendering device to stop, pause or resume rendering of said content item upon user request. In this way, the user of the device does not need to use an additional control device (e.g. the remote control of the rendering device) to control rendering after rendering has started. This can be implemented using existing UPnP commands.

According to the an example of the desription, the second object is realized in that the method for controlling rendering in a network comprises the steps of receiving a user request to render a content item stored on a network storage device, determining an estimation of network bandwidth required to send said content item from said network storage device to a rendering device at a rate that allows real-time rendering without buffering at said rendering device, determining whether said estimated network bandwidth exceeds a value representing network bandwidth available when said network storage device and said rendering device communicate indirectly through a wireless network access point, sending one or more messages requesting rendering of said content item on said rendering device with a request to send said content item through a peer-to-peer wireless network, in which said network storage device and said rendering device communicate directly, if said estimated network bandwidth exceeds said value, joining said peer-to-peer network if said estimated network bandwidth exceeds said value, sending one or more messages requesting rendering of said content item on said rendering device without a request to send said content item through an peer-to-peer wireless network if said estimated network bandwidth does not exceed said value, receiving an indicator of a current rendering status from said rendering device, and displaying a representation of said indicator.

### Brief description of the Drawings

These and other aspects of the description are apparent from and will be further elucidated, by way of example, with reference to the drawings, in which:
- Fig.1 is a block diagram of the device;
- Fig.2 is a flow diagram of the method;
- Fig.3 is a flow diagram illustrating embodiments of the method; and
- Fig.4 is a flow diagram of an embodiment of a method performed by the system.

Corresponding elements in the drawings are denoted by the same reference numeral.

### Detailed description of the Drawings

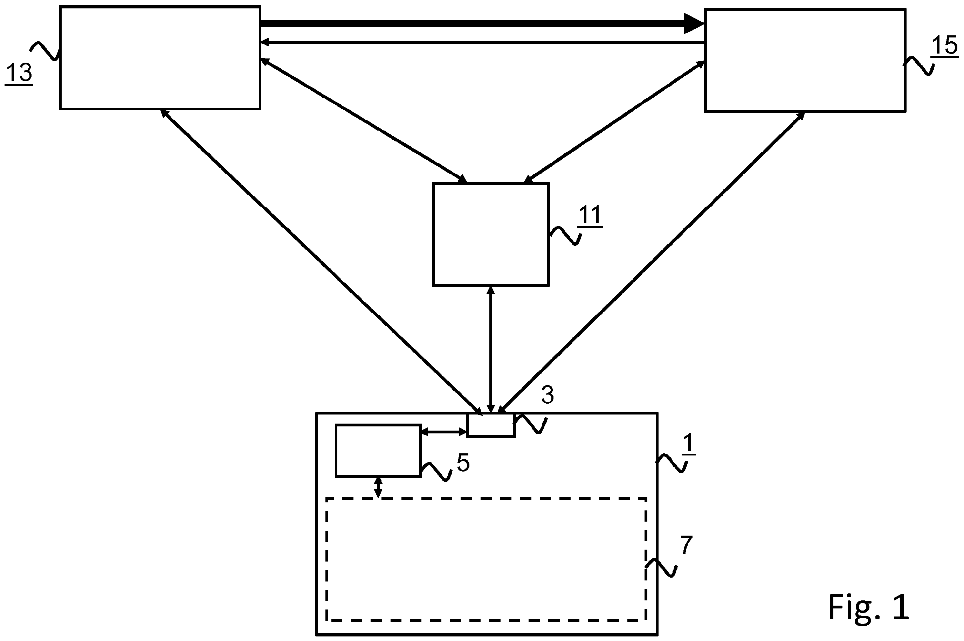

The device 1 for controlling rendering in a network comprises a wireless transceiver 3 for exchanging data with a network storage device 13 and a rendering device 15 and a processor 5, see Fig.1 . The processor 5 is operative to receive a user request to render a content item stored on a network storage device 13. The processor 5 is further operative to determine an estimation of network bandwidth required to send said content item from said network storage device 13 to said rendering device 15 at a rate which allows real-time rendering without buffering at said rendering device 15. The processor 5 is further operative to determine whether said estimated network bandwidth exceeds a value representing network bandwidth available when said network storage device 13 and said rendering device 15 communicate indirectly through a wireless network access point 11.

The processor 5 is further operative to use said wireless transceiver 3 to send one or more messages requesting rendering of said content item on said rendering device 15 with a request to send said content item through a peer-to-peer wireless network, in which said network storage device 13 and said rendering device 15 communicate directly, if said estimated network bandwidth exceeds said value. The processor 5 is further operative to use said wireless transceiver 3 to join said peer-to-peer network if said estimated network bandwidth exceeds said value. The processor 5 is further operative to use said wireless transceiver 3 to send one or more messages requesting rendering of said content item on said rendering device 15 without a request to send said content item through a peer-to-peer wireless network if said estimated network bandwidth does not exceed said value. The processor 5 is further operative to use said wireless transceiver 3 to receive an indicator of a current rendering status from said rendering device 15. The processor 5 is also operative to display a representation of said indicator on a display 7.

The device 1 may be a smart phone or a tablet, for example. The network storage device 13 may be a PC or a network attached storage, for example. The rendering device 15 may be a TV or a monitor, for example. The processor 5 may be a general-purpose processor or an application-specification processor, for example. The wireless transceiver 3 may comply with one or more of the IEEE 802.11 (Wi-Fi) specifications, for example. The display 7 may be part of the device 1 or may be external to the device 1. The display 7 may be a touch screen, for example. User requests may be specified with the help of input means on the device. For example, when the display 7 is a touch screen, the user may request the rendering of a content item by selecting a part of the screen corresponding to an identifier of the content item, the identifier being presented in a list of content item identifiers (e.g. titles). The wireless network access point 11 is a device that is not part of the network storage device 13 or the rendering device 15. The wireless network access point 11 may comply with one or more of the IEEE 802.11 (Wi-Fi) specifications, for example.

In an embodiment, at least one of said network storage device 13 and said rendering device 15 conforms to the Wi-Fi Direct standard. In the same or in a different embodiment, said processor 3 is further operative to repeatedly poll said rendering device 15 and to display a current rendering position on said display 7. In the same or in a different embodiment, said processor 3 is further operative to detect whether said network storage device 13 and said rendering device 15 are capable of communicating directly through a peer-to-peer wireless network and use said wireless transceiver 3 to send one or more messages requesting rendering of said content item on said rendering device 15 without a request to send said content item through a peer-to-peer wireless network if said network storage device 13 and said rendering device 15 are not capable of communicating directly through a peer-to-peer wireless network. Said processor 3 may be able to detect this by instructing the wireless transceiver 3 to query said network storage device 13 and said rendering device 15 (e.g. to obtain these devices' XML UPnP Media Server device description and UPnP Media Renderer device description, respectively). In the same or in a different embodiment, said processor 3 is further operative to send a command to said rendering device 15 to stop, pause or resume rendering of said content item upon user request. The user request may be the user selecting an icon or text representing a stop, pause or resume command on the display 7, for example.

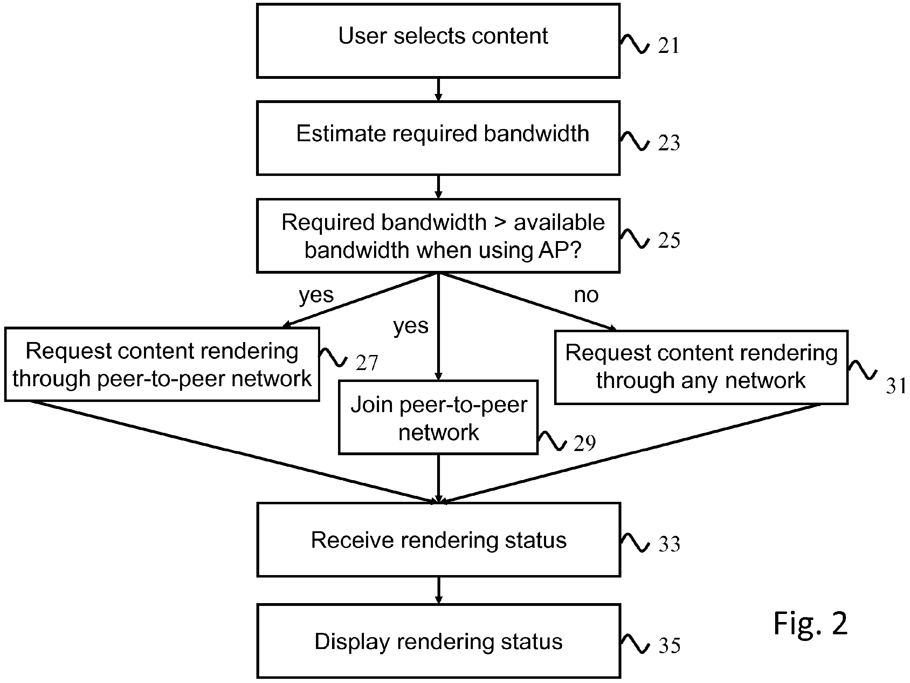

The method for controlling rendering in a network comprises a step 21 of receiving a user request to render a content item stored on a network storage device, see Fig.2 . The user does not need to know on which network storage device a content item is stored. A list of content items stored on different network storage devices may be presented together with or without an indication where the content item is stored. The method further comprises a step 23 of determining an estimation of network bandwidth required to send said content item from said network storage device to a rendering device at a rate that allows real-time rendering without buffering at said rendering device. This estimation can be made by dividing the file size by the file duration or can be obtained from the (e.g. UPnP) metadata of said content item if available, for example. The fact that the rate allows rendering without buffering does not mean that the rendering device cannot have a buffer. For example, the rendering device may have a jitter buffer in order to compensate for variations in bandwidth. The size of this jitter buffer may differ per media format and media bitrate. This jitter buffer may cache 2 to 3 seconds of playback, for example. The method further comprises a step 25 of determining whether said estimated network bandwidth exceeds a value representing network bandwidth available when said network storage device and said rendering device communicate indirectly through a wireless network access point. The value may be determined with the help of measurements obtained by joining a network formed by the wireless network access device and performing throughput tests or may be determined based on statistical data gathered per wireless network standard (e.g. IEEE 802.11a, IEEE 802.11b, IEEE 802.11n or IEEE 802.11ac), for example. In the latter case, the value per wireless network standard may be pre-configured in the (controller) device. Wireless network standards have a maximum bandwidth (e.g. 11Mbit/s for IEEE 802.b and 54Mbit/s for IEEE 802.11a), but usually cannot reach this maximum bandwidth due to the overhead of gaining medium access. Furthermore, if two devices communicate wirelessly through the same wireless network access point, the effective bandwidth is at most half of the normal maximum bandwidth.

The method further comprises a step 27 of sending one or more messages requesting rendering of said content item on said rendering device with a request to send said content item through a peer-to-peer wireless network, in which said network storage device and said rendering device communicate directly, if said estimated network bandwidth exceeds said value. One or more of these messages may be standardized in the UPnP standard or in the DLNA standard. The request to render said content item on said rendering device may be part of the same message as the request to send said content item through said peer-to-peer wireless network or these may be separate messages. In the latter case, step 27 may comprise first sending a message to switch to the peer-to-peer network followed by a message to render said content item on said rendering device. Step 27 may comprise sending one or more messages to each of the network storage device and the rendering device. Alternatively, step 27 may comprise sending one or more messages to either the network storage device or the rendering device, which then forwards the message or a similar message to the other device. In an embodiment, step 27 comprises sending a message to either the network storage device or the rendering device to create the peer-to-peer network and sending a message to other device to join this peer-to-peer network, followed by a message to the rendering device to pull the content item from the network storage device or a message to the network storage device to push the content item to the rendering device. The command to create the peer-to-peer network and/or the message to join the peer-to-peer network may be included in an XML UPnP device description and/or in an XML UPnP service description.

The method further comprises a step 29 of joining said peer-to-peer network if said estimated network bandwidth exceeds said value. Step 29 may be performed before or after step 27. The one or messages referred to above may be sent before or after said peer-to-peer network has been joined. If the peer-to-peer network does not yet exist, then the peer-to-peer network needs to be created first. In case a Wi-Fi Direct peer-to-peer network is used and neither the network storage device nor the rendering device has created such a network yet, the network storage device or the rendering device should first be requested to create such a Wi-Fii Direct peer-to-peer network. The peer-to-peer network may be torn down after the high-bit rate file has been completely rendered. In case multiple files or multiple high-bit rates have been selected by the user, the same peer-to-peer network may continue to existing during the entire session.

The method further comprises a step 31 of sending one or more messages requesting rendering of said content item on said rendering device without a request to send said content item through the peer-to-peer wireless network if said estimated network bandwidth does not exceed said value. If said estimated network bandwidth does not exceed said value, then no network needs to be specified in or along with the request to render the content item on said rendering device. Furthermore, no request to create or join the peer-to-peer network needs to be sent.

The method further comprises a step 33 of receiving an indicator of a current rendering status from said rendering device. The method also comprises a step 35 of displaying a representation of said indicator. Step 33 may comprise monitoring commands from said rendering device to said network storage device or monitoring whether content is streamed from said network storage device to said rendering device. Alternatively, step 33 may comprise polling the status at the rendering device or requesting call-backs from the rendering device when the rendering status changes. In its simplest form, the status may simply represent whether content rendering is active, paused or stopped.

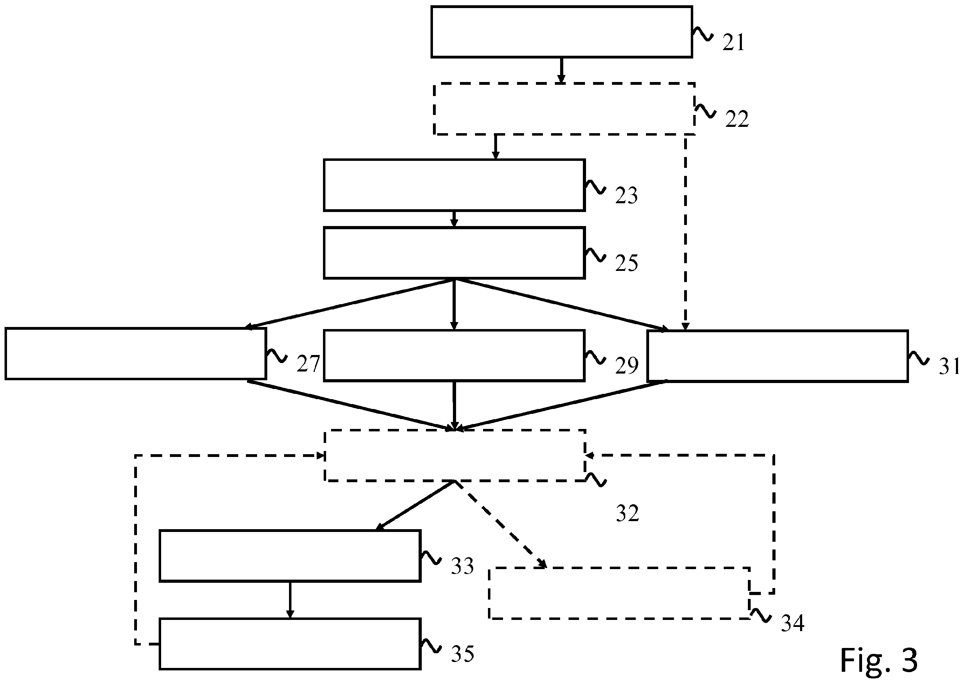

Fig.3 illustrates embodiments of a method. In an embodiment, at least one of said network storage device and said rendering device conforms to the Wi-Fi Direct standard. In the same or in a different embodiment, the method further comprises a step 22, following step 21, of detecting whether said network storage device and said rendering device are capable of communicating directly through the peer-to-peer wireless network and step 31 is performed if said network storage device and said rendering device are not capable of communicating directly through the peer-to-peer wireless network. If said network storage device and said rendering device are capable of communicating directly through the peer-to-peer wireless network, then step 23 is performed next.

In the same or in a different embodiment, the method further comprises a step 32, following step 27, 29 or 31 and preceding step 33, of repeatedly (e.g. every second) polling said rendering device. Furthermore, displaying a representation of said indicator then comprises displaying a current rendering position (e.g. 30 minutes elapsed). In the same or in a different embodiment, the method further comprises a step 34 of sending a command to said rendering device to stop, pause or resume rendering of said content item upon user request. A user may be able to make such a request at any time and an indicator of a current rendering status may be received from said rendering device at any time as well. Further UPnP commands like Seek, Next in playlist and Previous in playlist may be sent to said rendering device as part of step 34.

The method may be performed by a processor of a device for controlling rendering in a network and/or by software (for) running on a processor of a device for controlling rendering in a network.

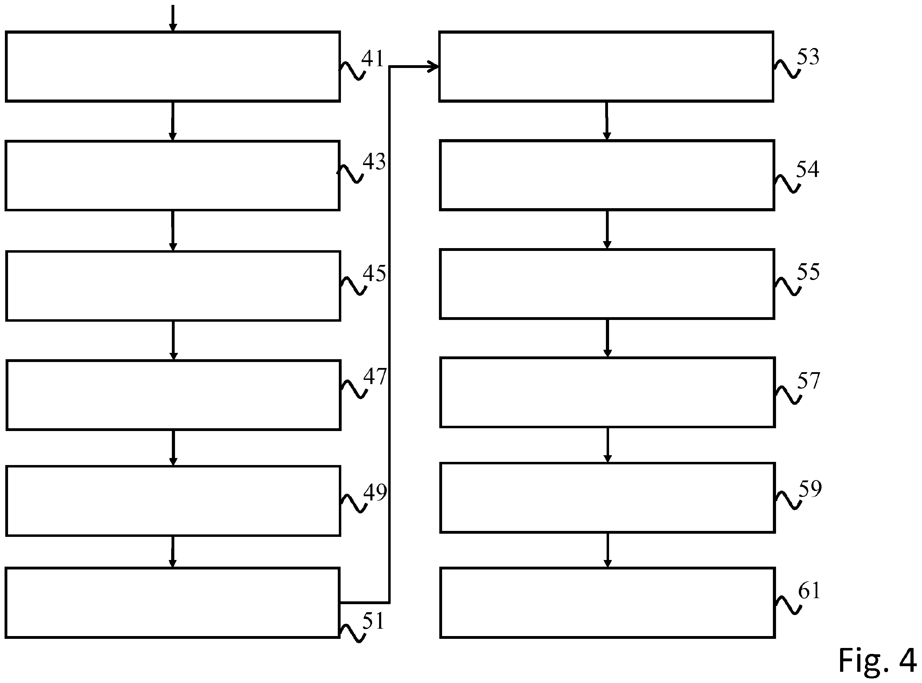

Fig.4 shows a flow diagram of an embodiment of a method performed by a system, the system comprising the (controller) device 1, the network storage device 13, the rendering device 15 and the wireless network access point 11 of Fig.1 . In step 41, a controller device browses media contents from a media server wherein metadata of media content is retrieved and displayed on the controller device's user interface, e.g. title, media type, duration, file size and album art. In step 43, a user chooses certain media content to be played on a TV renderer. In step 45, the controller device estimates required bandwidth for playback based on file size and duration or on the bitrate indication received along with other metadata (e.g. title) belonging to the media content and decides to switch to the peer-to-peer network. In step 47, the controller device sends a request to the TV renderer to start the peer-to-peer network along with an encrypted password generated by the controller device. In step 49, the controller device sends a message to the media server requesting it to join the peer-to-peer network along with an encrypted password. Step 49 does not require any human interaction. In step 51, the media server discovers the peer-to-peer network started by the TV renderer and joins this network after the TV renderer has verified the password. In step 53, the controller device gets a new URL for the selected content based on the peer-to-peer address of the media server through the network formed by the wireless network access point. The media server may send this new URL automatically to the controller or upon receiving a request from the controller. In step 54, the media server leaves the network formed by the wireless network access point. In this embodiment, the peer-to-peer network and the network formed by the wireless network access point can co-exist as long as streaming has not started yet. The media server may leave the network formed by the wireless network access point automatically after it has conveyed new URLs based on its peer-to-peer address to all controllers that have subscribed to its notifications. Alternatively, the media server may leave the network formed by the wireless network access point after it receives a message from the controller asking it to leave the wireless network access point. In step 55, the controller device joins the peer-to-peer network. The controller device may leave the network formed by the wireless network access point shortly before or after joining the peer-to-peer network. In step 57, the controller device pushes the selected media content by sending its URL to the TV renderer over the peer-to-peer network. In step 59, the TV renderer accesses the media content from the media server over the peer-to-peer network using the URL sent to it by the controller device and plays it. In step 61, the controller device repeatedly polls the TV renderer to update the playback status and position. The amount of data transferred between the controller device and the TV renderer is very small compared to the amount of data transferred between the media server and the TV renderer.

'Means', as will be apparent to a person skilled in the art, are meant to include any hardware (such as separate or integrated circuits or electronic elements) or software (such as programs or parts of programs) which perform in operation or are designed to perform a specified function, be it solely or in conjunction with other functions, be it in isolation or in co-operation with other elements. The examples of the description can be implemented by means of hardware comprising several distinct elements, and by means of a suitably programmed computer. The mere fact that certain measures are recited in mutually different dependent claims does not indicate that a combination of these measures cannot be used to advantage. 'Software' is to be understood to mean any software product stored on a computer-readable medium, such as a floppy disk, downloadable via a network, such as the Internet, or marketable in any other manner.

## Claims

1. A device (1) for controlling rendering in a network, comprising:
a wireless transceiver (3) for exchanging data with a network storage device (13) and a rendering device (15); and
a processor (5) operative to
- use said wireless transceiver (3) to receive an indicator of a current rendering status from said rendering device (15); and
- display, by the device (1), a representation of said indicator on a display (7);
the device being **characterized in that**
the processor (5) is operative to:
- receive in a first step (21, 43), by the device (1), a user request to render a content item stored on said network storage device (13);
- determine in a second step (23, 45) which is performed after the first step (21, 43), by the device (1), an estimation of network bandwidth required to send said content item from said network storage device (13) to said rendering device (15) at a rate which allows real-time rendering without buffering at said rendering device (15);
- determine in a third step (25, 45) which is performed after the second step (23, 45), by the device (1), whether said estimated network bandwidth exceeds a value representing network bandwidth available when said network storage device (13) and said rendering device (15) communicate indirectly through a wireless network access point (11);
- use in a fourth step (29, 55) which is performed after the third step (25, 45) said wireless transceiver (3) to join a peer-to-peer wireless network, in which said network storage device (13) and said rendering device (15) communicate directly, if said estimated network bandwidth exceeds said value;
- use in a fifth step (27, 57) which is performed after the fourth step (29, 55) said wireless transceiver (3) to send one or more messages requesting rendering of said content item on said rendering device (15) with a request, which is sent to said network storage device (13), to send said content item through said peer-to-peer wireless network (11) to said rendering device (15) if said estimated network bandwidth exceeds said value.
- use in a sixth step (31) which is performed after the third step (25, 45) said wireless transceiver (3) to send one or more messages requesting rendering of said content item on said rendering device (15), which communicates indirectly with said network storage device (13) through the wireless network access point (11) without a request to send said content item through said peer-to-peer wireless network to said rendering device (15) if said estimated network bandwidth does not exceed said value.

2. A device as claimed in claim 1, wherein at least one of said network storage device (13) and said rendering device (15) conforms to the Wi-Fi Direct standard.

3. A device as claimed in claim 1 or 2, wherein said processor (3) is further operative to repeatedly poll said rendering device (15) and to display a current rendering position on said display (7) .

4. A device as claimed in any of claims 1 to 3, wherein said device (1) is a smart phone or a tablet.

5. A device as claimed in any of claims 1 to 4, wherein said processor (3) is further operative to:
- detect whether said network storage device (13) and said rendering device (15) are capable of communicating directly through said peer-to-peer wireless network; and
- use said wireless transceiver (3) to send one or more messages requesting rendering of said content item on said rendering device (15) without a request to send said content item through said peer-to-peer wireless network if said network storage device (13) and said rendering device (15) are not capable of communicating directly through said peer-to-peer wireless network.

6. A device as claimed in any of claims 1 to 5, wherein said processor (3) is further operative to send a command to said rendering device (15) to stop, pause or resume rendering of said content item upon user request.

7. A method for controlling rendering in a network, the method to be implemented by a device (1) for data exchange with a network storage device (13) and a rendering device (15), and comprising the steps of:
- receiving (33, 61), by the device (1), an indicator of a current rendering status from said rendering device (15); and
- displaying (35, 61), by the device (1), a representation of said indicator;
the method being **characterized in** comprising the steps of:
- receiving in a first step (21, 43), by the device (1), a user request to render a content item stored on said network storage device (13);
- determining in a second step (23, 45) which is performed after the first step (21, 43), by the device (1), an estimation of network bandwidth required to send said content item from said network storage device (13) to said rendering device (15) at a rate that allows real-time rendering without buffering at said rendering device (15);
- determining in a third step (25, 45) which is performed after the second step (23, 45), by the device (1), whether said estimated network bandwidth exceeds a value representing network bandwidth available when said network storage device (13) and said rendering device (15) communicate indirectly through a wireless network access point (11);
- joining in a fourth step (29, 55) which is performed after the third step (25, 45), by the device (1), a peer-to-peer wireless network, in which said network storage device (13) and said rendering device (15) communicate directly, if said estimated network bandwidth exceeds said value;
- sending in a fifth step (27, 57) which is performed after the fourth step (29, 55), by the device (1), to said rendering device (15), one or more messages requesting rendering of said content item on said rendering device (15) with a request, which is sent to said network storage device (13), to send said content item through said peer-to-peer wireless network, in which said network storage device (13) and said rendering device (15) communicate directly, if said estimated network bandwidth exceeds said value;
- sending in a sixth step (31) which is performed after the third step (25, 45), by the device (1) to said rendering device (15), one or more messages requesting rendering of said content item on said rendering device (15), which communicates indirectly with said network storage device (13) through the wireless network access point (11), without a request to send said content item through said peer-to-peer wireless network if said estimated network bandwidth does not exceed said value.

8. A method as claimed in claim 7, wherein at least one of said network storage device (13) and said rendering device (15) conforms to the Wi-Fi Direct standard.

9. A method as claimed in claim 7 or 8, further comprising the step of repeatedly polling (32, 61) said rendering device (15) and wherein displaying a representation of said indicator comprises displaying a current rendering position.

10. A method as claimed in any of claims 7 to 9, further comprising the steps of:
- detecting (22) whether said network storage device (13) and said rendering device (15) are capable of communicating directly through said peer-to-peer wireless network; and
- sending (31) one or more messages requesting rendering of said content item on said rendering device (15) without a request to send said content item through said peer-to-peer wireless network if said network storage device (13) and said rendering device (15) are not capable of communicating directly through said peer-to-peer wireless network.

11. A method as claimed in any of claims 7 to 10, further comprising
the step of sending (34) a command to said rendering device (15) to stop, pause or resume rendering of said content item upon user request.

12. A method as claimed in one of the claims 7 to 11, wherein
determining the estimation of network bandwidth is made by one of dividing a file size by a file duration of said content item, and obtaining from metadata of said content item.

13. A computer program product being **characterized in** enabling a
programmable device to perform the method of any of claims 7 to 12.

## Patentansprüche

1. Vorrichtung (1) zum Steuern des Renderings in einem Netzwerk, Folgendes umfassend:
einen drahtlosen Sendeempfänger (3) zum Austauschen von Daten zwischen einer Netzwerkspeichervorrichtung (13) und einer Wiedergabevorrichtung (15); und
einen Prozessor (5), der betriebsfähig ist
- Verwendung, den drahtlosen Sendeempfänger (3), um einen Indikator eines aktuellen Renderingstatus von der Wiedergabevorrichtung (15) zu empfangen; und
- Anzeigen, durch die Vorrichtung (1), einer Darstellung des Indikators auf einer Anzeige (7);
wobei die Vorrichtung **dadurch gekennzeichnet ist, dass**
der Prozessor (5) betriebsfähig ist zum:
- Empfangen in einem ersten Schritt (21, 43), einer Benutzeranforderung durch die Vorrichtung (1), ein auf der Netzwerkspeichervorrichtung (13) gespeichertes Inhaltselement wiederzugeben;
- Bestimmen in einem zweiten Schritt (23, 45), der durch die Vorrichtung (1) nach dem ersten Schritt (21, 43) durchgeführt wird, einer Schätzung der Netzwerkbandbreite, die zum Senden des Inhaltselements von der Netzwerkspeichervorrichtung (13) erforderlich ist, an wobei die Wiedergabevorrichtung (15) auf einer Rate arbeitet, die eine Echtzeitwiedergabe ohne Pufferung an der Wiedergabevorrichtung (15) ermöglicht;
- Bestimmen in einem dritten Schritt (25, 45), der durch die Vorrichtung (1) nach dem zweiten Schritt (23, 45) durchgeführt wird, ob die geschätzte Netzwerkbandbreite einen Wert überschreitet, der die verfügbare Netzwerkbandbreite darstellt, wenn die Netzwerkspeichervorrichtung (13) und wobei die Wiedergabevorrichtung (15) indirekt über einen Zugangspunkt (11) für ein drahtloses Netzwerk kommuniziert;
- Verwenden des drahtlosen Sendeempfängers (3) in einem vierten Schritt (29, 55), der nach dem dritten Schritt (25, 45) durchgeführt wird, um einem Peer-to-Peer-Drahtlosnetzwerk beizutreten, wobei die Netzwerkspeichervorrichtung (13) und eine Wiedergabevorrichtung (15) direkt kommunizieren, wenn die geschätzte Netzwerkbandbreite den Wert überschreitet;
- Verwenden des drahtlosen Sendeempfängers (3) in einem fünften Schritt (27, 57), der nach dem vierten Schritt (29, 55) durchgeführt wird, um eine oder mehrere Nachrichten, die das Rendern des Inhaltselements auf der Wiedergabevorrichtung (15) anfordern, und eine Anforderung zu senden aufweist, das an die Netzwerkspeichervorrichtung (13) gesendet wird, um das Inhaltselement durch das drahtlose Peer-to-Peer-Netzwerk (11) an die Wiedergabevorrichtung (15) zu senden, falls die geschätzte Netzwerkbandbreite den Wert überschreitet.
- Verwenden des drahtlosen Sendeempfängers (3) in einem sechsten Schritt (31), der nach dem dritten Schritt (25, 45) durchgeführt wird, wenigstens eine Nachricht zu senden, die das Rendern des Inhaltselements auf der Wiedergabevorrichtung (15) anfordern, die indirekt zu der Netzwerkspeichervorrichtung (13) durch den drahtlosen Netzwerkzugangspunkt (11) kommuniziert, ohne eine Aufforderung, das Inhaltselement durch das drahtlose Peer-to-Peer-Netzwerk an die Wiedergabevorrichtung (15) zu senden, verläuft, wenn die geschätzte Netzwerkbandbreite den Wert nicht überschreitet.

2. Vorrichtung nach Anspruch 1, wobei wenigstens eine der Netzwerkspeichervorrichtungen (13) und der Wiedergabevorrichtung (15) dem Wi-Fi Direct-Standard entsprechen.

3. Vorrichtung nach Anspruch 1 oder 2, wobei der Prozessor (3) ferner dazu dient, die Wiedergabevorrichtung (15) wiederholt abzurufen und eine aktuelle Wiedergabeposition auf der Anzeige (7) anzuzeigen.

4. Vorrichtung nach einem der Ansprüche 1 bis 3, wobei die Vorrichtung (1) ein Smartphone oder ein Tablet ist.

5. Vorrichtung nach einem der Ansprüche 1 bis 4, wobei der Prozessor (3) ferner betriebsfähig ist zum:
- Erfassen, ob die Netzwerkspeichervorrichtung (13) und die Wiedergabevorrichtung (15) in der Lage sind, direkt über das drahtlose Peer-to-Peer-Netzwerk zu kommunizieren; und
- Verwenden des drahtlosen Sendeempfängers (3), um eine oder mehrere Nachrichten zu senden, die ein Rendern des Inhaltselements auf der Wiedergabevorrichtung (15) anfordern, ohne eine Anforderung, das Inhaltselement durch das drahtlose Peer-to-Peer-Netzwerk zu senden, wenn die Netzwerkspeichervorrichtung (13) und die Wiedergabevorrichtung (15) nicht in der Lage sind, direkt über das drahtlose Peer-to-Peer-Netzwerk zu kommunizieren.

6. Vorrichtung nach einem der Ansprüche 1 bis 5, wobei der Prozessor (3) ferner betriebsfähig ist, um einen Befehl an die Wiedergabevorrichtung (15) zu senden, das Rendering des Inhaltselements auf Benutzeranforderung zu beenden, anzuhalten oder fortzusetzen.

7. Verfahren zum Steuern des Renderings in einem Netzwerk, wobei das Verfahren durch eine Vorrichtung (1) zum Datenaustausch zwischen einer Netzwerkspeichervorrichtung (13) und einer Renderingvorrichtung (15) implementiert werden soll und die folgenden Schritte umfasst:
- Empfangen (33, 61), durch die Vorrichtung (1), eines Indikators eines aktuellen Renderingstatus von der Wiedergabevorrichtung (15); und
- Anzeigen (35, 61) einer Darstellung des Indikators durch die Vorrichtung (1);
wobei das Verfahren **dadurch gekennzeichnet ist, dass** es die folgenden Schritte umfasst:
- Empfangen, in einem ersten Schritt (21, 43), einer Benutzeranforderung durch die Vorrichtung (1), ein auf der Netzwerkspeichervorrichtung (13) gespeichertes Inhaltselement zu rendern;
- Bestimmen, in einem zweiten Schritt (23, 45), der durch die Vorrichtung (1) nach dem ersten Schritt (21, 43) durchgeführt wird, einer Schätzung der Netzwerkbandbreite, die erforderlich ist, um das Inhaltselement von der Netzwerkspeichervorrichtung (13) an die Wiedergabevorrichtung (15) zu senden, bei einer Rate, die eine Echtzeitwiedergabe ohne Pufferung an der Wiedergabevorrichtung (15) ermöglicht;
- Bestimmen, in einem dritten Schritt (25, 45), der durch die Vorrichtung (1) nach dem zweiten Schritt (23, 45) durchgeführt wird, ob die geschätzte Netzwerkbandbreite einen Wert überschreitet, der die verfügbare Netzwerkbandbreite darstellt, wenn die Netzwerkspeichervorrichtung (13) und wobei die Wiedergabevorrichtung (15) indirekt über einen Zugangspunkt (11) für ein drahtloses Netzwerk kommuniziert;
- Verbinden, in einem vierten Schritt (29, 55), der durch die Vorrichtung (1) nach dem dritten Schritt (25, 45) durchgeführt wird, eines drahtlosen Peer-to-Peer-Netzwerks, wobei die Netzwerkspeichervorrichtung (13) und die eine Wiedergabevorrichtung (15) direkt kommunizieren, wenn die geschätzte Netzwerkbandbreite den Wert überschreitet;
- Senden, in einem fünften Schritt (27, 57), der durch die Vorrichtung (1) nach dem vierten Schritt (29, 55) durchgeführt wird, an die Wiedergabevorrichtung (15), von einer oder mehreren Nachrichten, die ein Rendern des Inhaltselements auf dieser anfordern Wiedergabevorrichtung (15) die eine Anforderung aufweist, die an die Netzwerkspeichervorrichtung (13) gesendet wird, das Inhaltselement durch das drahtlose Peer-to-Peer-Netzwerk zu senden, in dem die Netzwerkspeichervorrichtung (13) und die Wiedergabevorrichtung (15) direkt zu kommunizieren, falls die geschätzte Netzwerkbandbreite den Wert überschreitet;
- Senden, in einem sechsten Schritt (31), der durch die Vorrichtung (1) nach dem dritten Schritt (25, 45) durchgeführt wird, an die Wiedergabevorrichtung (15), einer oder mehrerer Nachrichten, die das Rendern des Inhaltselements auf der Wiedergabevorrichtung (15) anfordern, die indirekt zu der Netzwerkspeichervorrichtung (13) über den drahtlosen Netzwerkzugangspunkt (11) kommuniziert, ohne eine Anforderung, das Inhaltselement durch das Peer-to-Peer-Drahtlosnetzwerk zu senden, falls die geschätzte Netzwerkbandbreite den Wert nicht überschreitet.

8. Verfahren nach Anspruch 7, wobei wenigstens eine der Netzwerkspeichervorrichtungen (13) und die Wiedergabevorrichtung (15) dem Wi-Fi Direct-Standard entsprechen.

9. Verfahren nach Anspruch 7 oder 8, ferner umfassend den Schritt des wiederholten Abrufens (32, 61) der Wiedergabevorrichtung (15), und wobei das Anzeigen einer Darstellung des Indikators das Anzeigen einer aktuellen Wiedergabeposition umfasst.

10. Verfahren nach einem der Ansprüche 7 bis 9, ferner umfassend die Schritte:
- Erfassen (22), ob die Netzwerkspeichervorrichtung (13) und die Wiedergabevorrichtung (15) in der Lage sind, direkt über das drahtlose Peer-to-Peer-Netzwerk zu kommunizieren; und
- Senden (31) einer oder mehrerer Nachrichten, die ein Rendern des Inhaltselements auf der Wiedergabevorrichtung (15) anfordern, ohne eine Anforderung, das Inhaltselement durch das drahtlose Peer-to-Peer-Netzwerk zu senden, wenn die Netzwerkspeichervorrichtung (13) und die Wiedergabevorrichtung (15) nicht in der Lage sind, direkt über das drahtlose Peer-to-Peer-Netzwerk zu kommunizieren.

11. Verfahren nach einem der Ansprüche 7 bis 10, ferner umfassend den Schritt des Sendens (34) eines Befehls an die Wiedergabevorrichtung (15), das Rendern des Inhaltselements auf Benutzeranforderung zu beenden, anzuhalten oder fortzusetzen.

12. Verfahren nach einem der Ansprüche 7 bis 11, wobei das Bestimmen der Schätzung der Netzwerkbandbreite durch Dividieren einer Dateigröße durch eine Dateidauer des Inhaltselements oder Erhalten von Metadaten des Inhaltselements erfolgt.

13. Computerprogrammprodukt, **dadurch gekennzeichnet, dass** es einer programmierbaren Vorrichtung ermöglicht wird, das Verfahren nach einem der Ansprüche 7 bis 12 durchzuführen.

## Revendications

1. Dispositif (1) pour contrôler le rendu dans un réseau, comprenant:
un émetteur-récepteur sans fil (3) pour échanger des données avec un dispositif de stockage en réseau (13) et un dispositif de rendu (15); et un processeur (5) apte à
- utiliser ledit émetteur-récepteur sans fil (3) pour recevoir un indicateur d'un état de rendu actuel à partir dudit dispositif de rendu (15); et
- afficher, par le dispositif (1), une représentation dudit indicateur sur un écran (7);
le dispositif étant **caractérisé en ce que**
le processeur (5) est apte à:
- recevoir dans une première étape (21, 43), par le dispositif (1), une demande d'utilisateur pour rendre un élément de contenu stocké sur ledit dispositif de stockage en réseau (13);
- déterminer dans une deuxième étape (23, 45) qui est exécutée après la première étape (21, 43), par le dispositif (1), une estimation de la largeur de bande de réseau requise pour envoyer ledit élément de contenu dudit dispositif de stockage en réseau (13) audit dispositif de rendu (15) à un débit qui permet un rendu en temps réel sans mise en mémoire tampon au niveau dudit dispositif de rendu (15);
- déterminer dans une troisième étape (25, 45) qui est exécutée après la deuxième étape (23, 45), par le dispositif (1), si ladite largeur de bande de réseau estimée dépasse une valeur représentant la largeur de bande de réseau disponible lorsque ledit dispositif de stockage en réseau (13) et ledit dispositif de rendu (15) communiquent indirectement par l'intermédiaire d'un point d'accès de réseau sans fil (11);
- utiliser dans une quatrième étape (29, 55) qui est exécutée après la troisième étape (25, 45) ledit émetteur-récepteur sans fil (3) pour rejoindre un réseau sans fil poste à poste, dans lequel ledit dispositif de stockage en réseau (13) et ledit dispositif de rendu (15) communiquent directement, si ladite largeur de bande de réseau estimée dépasse ladite valeur;
- utiliser dans une cinquième étape (27, 57) qui est exécutée après la quatrième étape (29, 55) ledit émetteur-récepteur sans fil (3) pour envoyer un ou plusieurs messages demandant le rendu dudit élément de contenu sur ledit dispositif de rendu (15) avec une demande, qui est envoyée audit dispositif de stockage en réseau (13), pour envoyer ledit élément de contenu à travers ledit réseau sans fil poste à poste (11) audit dispositif de rendu (15) si ladite largeur de bande de réseau estimée dépasse ladite valeur.
- utiliser dans une sixième étape (31) qui est exécutée après la troisième étape (25, 45) ledit émetteur-récepteur sans fil (3) pour envoyer un ou plusieurs messages demandant le rendu dudit élément de contenu sur ledit dispositif de rendu (15), qui communique indirectement avec ledit dispositif de stockage en réseau (13) par l'intermédiaire du point d'accès au réseau sans fil (11) sans une demande d'envoi dudit élément de contenu par l'intermédiaire dudit réseau sans fil poste à poste audit dispositif de rendu (15) si ladite largeur de bande de réseau estimée ne dépasse pas ladite valeur.

2. Dispositif selon la revendication 1, dans lequel au moins l'un dudit dispositif de stockage en réseau (13) et dudit dispositif de rendu (15) est conforme à la norme Wi-Fi Direct.

3. Dispositif selon la revendication 1 ou 2, dans lequel ledit processeur (3) est en outre apte à interroger de manière répétée ledit dispositif de rendu (15) et à afficher une position de rendu actuelle sur ledit affichage (7).

4. Dispositif selon l'une quelconque des revendications 1 à 3, dans lequel ledit dispositif (1) est un Smartphone ou une tablette.

5. Dispositif selon l'une quelconque des revendications 1 à 4, dans lequel ledit processeur (3) est en outre apte à:
- détecter si ledit dispositif de stockage en réseau (13) et ledit dispositif de rendu (15) sont capables de communiquer directement par l'intermédiaire dudit réseau sans fil poste à poste; et
- utiliser ledit émetteur-récepteur sans fil (3) pour envoyer un ou plusieurs messages demandant le rendu dudit élément de contenu sur ledit dispositif de rendu (15) sans demande d'envoi dudit élément de contenu par l'intermédiaire dudit réseau sans fil poste-à-poste si ledit dispositif de stockage en réseau (13) et ledit dispositif de rendu (15) ne sont pas capables de communiquer directement par l'intermédiaire dudit réseau sans fil poste-à-poste.

6. Dispositif selon l'une quelconque des revendications 1 à 5, dans lequel ledit processeur (3) est en outre apte à envoyer une commande audit dispositif de rendu (15) pour arrêter, mettre en pause ou reprendre le rendu dudit élément de contenu à la demande de l'utilisateur.

7. Procédé pour contrôler le rendu dans un réseau, le procédé devant être mis en œuvre par un dispositif (1) pour échanger des données avec un dispositif de stockage en réseau (13) et un dispositif de rendu (15), et comprenant les étapes consistant à:
- recevoir (33, 61), par le dispositif (1), un indicateur d'un état de rendu actuel provenant dudit dispositif de rendu (15); et
- afficher (35, 61), par le dispositif (1), une représentation dudit indicateur;
le procédé étant **caractérisé en ce qu'**il comprend les étapes suivantes:
- recevoir dans une première étape (21, 43), par le dispositif (1), une demande d'utilisateur pour rendre un élément de contenu stocké sur ledit dispositif de stockage en réseau (13);
- déterminer dans une deuxième étape (23, 45) qui est exécutée après la première étape (21, 43), par le dispositif (1), une estimation de la largeur de bande de réseau requise pour envoyer ledit élément de contenu dudit dispositif de stockage en réseau (13) audit dispositif de rendu (15) à un débit qui permet un rendu en temps réel sans mise en mémoire tampon au niveau dudit dispositif de rendu (15);
- déterminer dans une troisième étape (25, 45) qui est exécutée après la deuxième étape (23, 45), par le dispositif (1), si ladite largeur de bande de réseau estimée dépasse une valeur représentant la largeur de bande de réseau disponible lorsque ledit dispositif de stockage en réseau (13) et ledit dispositif de rendu (15) communiquent indirectement par l'intermédiaire d'un point d'accès de réseau sans fil (11);
- joindre dans une quatrième étape (29, 55) qui est exécutée après la troisième étape (25, 45), par le dispositif (1), un réseau sans fil poste à poste, dans lequel ledit dispositif de stockage en réseau (13) et ledit dispositif de rendu (15) communiquent directement, si ladite largeur de bande de réseau estimée dépasse ladite valeur;
- envoyer dans une cinquième étape (27, 57) qui est exécutée après la quatrième étape (29, 55), par le dispositif (1), audit dispositif de rendu (15), un ou plusieurs messages demandant le rendu dudit élément de contenu sur ledit dispositif de rendu (15) avec une demande, qui est envoyée audit dispositif de stockage en réseau (13), pour envoyer ledit élément de contenu par l'intermédiaire dudit réseau sans fil poste à poste, dans lequel ledit dispositif de stockage en réseau (13) et ledit dispositif de rendu (15) communiquent directement, si ladite largeur de bande de réseau estimée dépasse ladite valeur;
- envoyer dans une sixième étape (31) qui est exécutée après la troisième étape (25, 45), par le dispositif (1) audit dispositif de rendu (15), un ou plusieurs messages demandant le rendu dudit élément de contenu sur ledit dispositif de rendu (15), qui communique indirectement avec ledit dispositif de stockage en réseau (13) par l'intermédiaire du point d'accès au réseau sans fil (11), sans demande d'envoi dudit élément de contenu par l'intermédiaire dudit réseau sans fil poste à poste, si ladite largeur de bande de réseau estimée ne dépasse pas ladite valeur.

8. Procédé selon la revendication 7, dans lequel au moins l'un dudit dispositif de stockage en réseau (13) et dudit dispositif de rendu (15) est conforme à la norme Wi-Fi Direct.

9. Procédé selon la revendication 7 ou 8, comprenant en outre l'étape consistant à interroger de manière répétée (32, 61) ledit dispositif de rendu (15) et dans lequel l'affichage d'une représentation dudit indicateur comprend l'affichage d'une position de rendu actuelle.

10. Procédé selon l'une quelconque des revendications 7 à 9, comprenant en outre les étapes suivantes:
- détecter (22) si ledit dispositif de stockage en réseau (13) et ledit dispositif de rendu (15) sont capables de communiquer directement par l'intermédiaire dudit réseau sans fil poste à poste; et
- envoyer (31) un ou plusieurs messages demandant le rendu dudit élément de contenu sur ledit dispositif de rendu (15) sans demande d'envoi dudit élément de contenu par l'intermédiaire dudit réseau sans fil poste à poste, si ledit dispositif de stockage en réseau (13) et ledit dispositif de rendu (15) ne sont pas capables de communiquer directement par l'intermédiaire dudit réseau sans fil poste à poste.

11. Procédé selon l'une quelconque des revendications 7 à 10, comprenant en outre l'étape consistant à envoyer (34) une commande audit dispositif de rendu (15) pour arrêter, mettre en pause ou reprendre le rendu dudit élément de contenu à la demande de l'utilisateur.

12. Procédé selon l'une des revendications 7 à 11, dans lequel la détermination de l'estimation de la bande passante du réseau est effectuée par l'une des opérations suivantes: division d'une taille de fichier par une durée de fichier dudit élément de contenu, et obtention à partir de métadonnées dudit élément de contenu.

13. Programme informatique **caractérisé en ce qu'**il permet à un dispositif programmable d'exécuter le procédé selon l'une quelconque des revendications 7 à 12.
